(19) Europäisches Patentamt
European Patent Office
Office européen des brevets

(11) **EP 1 625 357 B1**

(12) **EUROPÄISCHE PATENTSCHRIFT**

(45) Veröffentlichungstag und Bekanntmachung des Hinweises auf die Patenterteilung:
**08.08.2007 Patentblatt 2007/32**

(21) Anmeldenummer: **04739168.5**

(22) Anmeldetag: **11.05.2004**

(51) Int Cl.:
***G01D 1/18*** *(2006.01)*

(86) Internationale Anmeldenummer:
**PCT/EP2004/005014**

(87) Internationale Veröffentlichungsnummer:
**WO 2004/099729 (18.11.2004 Gazette 2004/47)**

(54) **MESSVORRICHTUNG MIT EINEM MESSFÜHLER**

MEASURING DEVICE COMPRISING A PROBE

DISPOSITIF DE MESURE COMPRENANT UNE SONDE DE MESURE

(84) Benannte Vertragsstaaten:
**AT BE BG CH CY CZ DE DK EE ES FI FR GB GR HU IE IT LI LU MC NL PL PT RO SE SI SK TR**

(30) Priorität: **12.05.2003 DE 10321439**

(43) Veröffentlichungstag der Anmeldung:
**15.02.2006 Patentblatt 2006/07**

(73) Patentinhaber: **KNORR-BREMSE Systeme für Schienenfahrzeuge GmbH 80809 München (DE)**

(72) Erfinder:
• **SCHAFITEL, Franz**
  **85247 Schwabhausen (DE)**
• **KOTSCHI, Elmar**
  **84453 Mühldorf am Inn (DE)**
• **BRUSSOG, Bert**
  **82140 Olching/Geisselbullach (DE)**
• **GERKE, Claus**
  **85757 Karlsfeld (DE)**
• **MOSER, Franz**
  **80336 München (DE)**
• **LEBERFING, Johann**
  **80469 München (DE)**
• **KNIPFER, Stefan**
  **80469 München (DE)**
• **SIEBERT, Igor**
  **82110 Germering (DE)**

(74) Vertreter: **Schönmann, Kurt Knorr-Bremse AG Moosacher Strasse 80 80809 München (DE)**

(56) Entgegenhaltungen:
DE-A- 10 046 566      DE-A- 19 539 458
US-A- 4 491 794       US-A- 5 491 412
US-A- 5 898 366       US-A- 6 009 357

EP 1 625 357 B1

**Beschreibung**

Die Erfindung betrifft eine Messvorrichtung mit wenigstens einem Messfühler. Solche Messvorrichtungen werden beispielsweise bei Schienenfahrzeugen als Hallsensor ausgebildet, die im Bereich eines Zahnrads angebracht sind. Der Hallsensor ist dabei so im Bereich der Zähne des Zahnrads angebracht, dass die durch die Zähne verursachte Flussänderung eines Magnetfelds vom Hallsensor detektiert wird.

Dabei ist es wünschenswert, im Betrieb zusätzliche Informationen über ein ordnungsgemäßes Funktionieren der Messeinrichtung bzw. der Messfühler der Messeinrichtung zu erhalten. Die EP 0 886 762 B1 zeigt ein Verfahren und eine Vorrichtung zur Überprüfung eines Sensorbauteils.

Die US 6 009 357 A zeigt einen Messfühler mit einem elektromagnetischen Sensorbauteil zur Erzeugung eines Messsignals, wobei im Bereich des Sensorbauteils eine Stimulusspule zur Erzeugung eines elektromagnetischen Stimulusfeldes für das Sensorbauteil vorgesehen ist.

Im Bereich des Sensorbauteils ist eine digital arbeitende Abtastvorrichtung vorgesehen, die das vom Sensorbauteil abgegebene Signal darauf hin abtastet, ob es ein vorbestimmtes Messsignal darstellt. Beim Vorliegen eines solchen vorbestimmten Messsignals wird an einem Ausgangsanschluss ein vorbestimmtes Ausgangssignal abgegeben, das vorzugsweise mit dem Messsignal übereinstimmt .

Es ist Aufgabe der Erfindung, einen verbesserten Messfühler und eine Messvorrichtung mit einem solchen Messfühler bereitzustellen. Diese Aufgabe wird durch Anspruch 1 gelöst.

Bei einem Schienenfahrzeug kann das Messsignal eine normale Impulsfolge sein, die von einem Hallsensor erzeugt wird, wenn in seinem Bereich ein Zahnrad Änderungen eines Magnetfelds erzeugt. Eine solche Impulsfolge deutet auf eine Bewegung des Fahrzeugs hin. Wenn die Abtastvorrichtung beim Abtasten eines zweiten vorbestimmten Messsignals ein zweites vorbestimmtes Ausgangssignal abgibt, dann kann die Funktion des Messfühlers auf einfache Weise überprüft werden. Man spricht in einem solchen Fall von einer Mittenspannungsanzeige. Unter "Mittenspannung" ist eine Spannung zu verstehen, die zwischen der Ausgangsspannung des Messfühlers in stromlosem Zustand und der Ausgangsspannung des Messfühlers bei einer Bewegung des Fahrzeugs liegt. Das zweite vorherbestimmte Messsignal wird dann vorzugsweise so gewählt, dass es dem Stillstand des Schienenfahrzeugs entspricht. Für den Fall des Stillstands des Schienenfahrzeugs wird eine Mittenspannung erzeugt. Wird keine solche Mittenspannung festgestellt, obwohl sich das Fahrzeug in Betrieb befindet und obwohl - beispielsweise aus einer Zusatzinformation - man weiß, dass sich das Fahrzeug nicht bewegt, dann muss ein Defekt im Bereich des Messfühlers vorliegen.

Eine solche Abtastvorrichtung weist ein zeitlich versetzt aktivierbares und zurücksetzbares Monoflop auf, das beim Abtasten des ersten vorbestimmten Ausgangssignals wiederkehrend zurückgesetzt werden kann. **Das Ausgangssignal des Monoflops steuert einen Analogschalter an, der bei getriggertem Monoflop die vom Sensorbauteil abgegebene Spannung und bei Ablauf des instabilen Zustands des Monoflops eine Mittenspannung an einen Signalausgang des Messfühlers durchschaltet.**

Die Erfindung umfasst auch eine Messvorrichtung mit einem der oben angegebenen Messfühler, wobei eine Auswerteeinheit vorgesehen ist, die die vom Messfühler abgegebenen Signale mit einem oder mehreren Referenzwerten vergleicht.

Das Messfühlergehäuse wird vorzugsweise mit einem Außenrohr sowie mit einer in der als Außenrohr eingesetzten Abschlusskappe oder mit einer in das Außenrohr eingesetzten Anschlusskappe bereitgestellt. Im Bereich der Abschlusskappe ist wenigstens ein Sensor angeordnet. Im Bereich der Anschlusskappe kann ein elektrischer Anschlussbereich angeordnet sein, wobei das Außenrohr einen umgeformten Haltebereich aufweist, der so ausgebildet ist, dass die Abschlusskappe bzw. die Anschlusskappe in dem Außenrohr gehalten ist. Durch ein solches Umformen lässt sich mit einer Abschlusskappe oder Anschlusskappe auf besonders einfache und schnelle Weise ein umweltdichter Messfühler herstellen.

Dabei ist in wenigstens einem Übergangsbereich zwischen Außenrohr und Abschlusskappe ein Anlaufabsatz mit einem darin eingesetzten Gummidichtring vorgesehen.

Gerade mit einer Anschlusskappe lassen sich ein elektrischer Anschluss, eine Zugentlastung, eine Abdichtung und ein Knickschutz auf einfache Weise und in einem bereitstellen.

Die erfindungsgemäße Ausbildung sieht in dem Außenrohr eine Haltekappe vor, in deren Bereich wenigstens ein Sensor angeordnet ist. Die Haltekappe gliedert sich dabei in zwei Kappenschalen, die sich auch zu einem Kappeneinsatz ergänzen können. Mit einer solchen Ausbildung lässt sich der erfindungsgemäße Messfühler besonders einfach herstellen. Die Haltekappe wird zur Montage des Sensors aufgeteilt und danach durch Zusammensetzen der beiden Kappenschalen fertig gestellt. Anschließend kann die Haltekappe so in das Außenrohr eingeführt werden. Mit einer solchen Haltekappe kann eine Ausrichtung eines Sensors bezüglich des Außenrohrs auf besonders einfache Weise hergestellt werden.

Im Bereich der Kappenschalen kann wenigstens ein Flexfolienkanal ausgebildet sein, der von der Trennebene der Kappenschalen aufgeteilt wird. In einen solchen Flexfolienkanal lässt sich eine Flexfolie besonders einfach einlegen. Wenn die Trennebene durch den Flexfolienkanal verläuft, dann kann die Flexfolie zur Montage in eine der Kappenschalen eingelegt werden. Durch Aufsetzen der zweiten Kappenschale wird der Flexfolienkanal geschlossen. Der Flexfolienkanal wird dabei vorzugsweise als symmetrisch durchgehender Kanal ausgebildet, wobei in einem Kanalzentralbereich eine Sensorkammer vorgesehen ist. In einer solchen Sensorkammer kann ein auf einer Flexfolie vorgesehener Sensor besonders einfach und passgenau angeordnet werden. Dies bietet sich besonders für Sensoren an, deren Ausrichtung bezüglich der Kappenschalen von Bedeutung für das Messergebnis ist.

Ein besonders dichtes Messfühlergehäuse ergibt sich dann, wenn eine in das Außenrohr eingesetzte Abschlusskappe vorgesehen ist, die auch die Kappenschalen umschließt. Die Kappenschalen sind dabei im Inneren der Abschlusskappe angeordnet und werden von dieser zusammengehalten.

Zur Verbesserung der Halterung der Kappenschalen im Inneren der Abschlusskappe können die Kappenschalen Rastnasen aufweisen, die in Rastöffnungen der Abschlusskappe eingreifen. Ebenso können auch umgekehrt die Kappenschalen Rastöffnungen aufweisen, in die Rastnasen der Abschlusskappe eingreifen.

Eine besonders vorteilhafte Ausführungsform eines erfindungsgemäßen Messfühlers weist eine Leiterplatte mit einem ersten und mit einem zweiten starren Leiterplattenbereich auf. Dazwischen erstreckt sich ein flexibler Leiterplattenbereich, wobei auf dem flexiblen Leiterplattenbereich wenigstens ein Sensorbauteil angeordnet ist. Der erste und der zweite starre Leiterplattenbereich sind aneinander liegend angeordnet. Mit einem solchen Messfühler lässt sich eine besonders genaue winklige Anordnung eines Sensorbauteils bezüglich der beiden starren Leiterplattenbereiche erreichen. Durch die Länge des flexiblen Leiterplattenbereichs und durch die Anordnung des Sensorbauteils auf dem flexiblen Leiterplattenbereich lässt sich nämlich mit dessen Winkel bezüglich der starren Leiterplattenbereiche sehr genau vorherbestimmen. Wenn die starren Leiterplattenbereiche aneinander liegen, dann bildet der dazwischen liegende flexible Leiterplattenbereich nämlich einen Bogen mit sehr genau vorherbestimmbarer Biegelinie aus. Durch die Position des Sensorbauteils auf dieser Biegelinie ergibt sich die winklige Verdrehung des Sensorbauteils bezüglich der flexiblen Leiterplattenbereiche.

Zur Verbesserung der Verbindung zwischen dem ersten und zweiten Leiterplattenbereich sind dabei Verbindungselemente vorgesehen, die ein Verrutschen der starren Leiterplattenbereiche gegeneinander verhindern.

Das Messfühlergehäuse weist vorteilhafterweise Führungsschienen für den ersten und den zweiten starren Leiterplattenbereich auf, in denen diese geführt werden. Auf diese Weise lässt sich eine besonders genaue winklige Anordnung des Sensorbauteils bezüglich des Messfühlergehäuses erreichen.

Mit der erfindungsgemäßen Ausbildung mit aneinander liegenden starren Leiterplattenbereichen lässt sich auf besonders einfache Weise eine Kontaktierung mit einem Anschlussstecker oder einer Anschlussbuchse erreichen. Dazu werden im Bereich eines Kontaktrandes der Leiterplatte offen liegende Leiterbahnen auf dem ersten oder auf dem zweiten starren Leiterplattenbereich vorgesehen. Auf diese offen liegenden Leiterbahnen kann dann eine elektrische Anschlussbuchse aufgesteckt werden, wobei die Anschlussbuchse wenigstens einen Federkontaktbereich aufweist. Dieser Federkontaktbereich tritt einerseits mit einem der beiden starren Leiterplattenbereiche und andererseits mit einer Leiterbahn auf dem anderen starren Leiterplattenbereich in Kontakt. Es ist auch möglich, im Federkontaktbereich zwei Kontaktfedern vorzusehen, von denen je eine eine Leiterbahn auf einer der beiden starren Leiterplattenbereichen kontaktiert.

Der Federkontaktbereich weist dabei je zwei gegenüberliegende Klammerkontakte auf, die gegen eine dazwischen eingeschobene Leiterplatte federnverschieblich ausgebildet sind. Auf diese Weise lässt sich eine besonders gute und dauerhafte Kontaktierung erreichen.

Fig. 1 t zeigt ein schematisches Schaltbild eines Teils eines Messfühlers,

Fig. 2 zeigt ein schematisches Schaltbild eines Hall-Sensors IC101, der als Sensorelement im Messfühler gemäß Fig. 1 eingesetzt ist,

Fig. 3 zeigt einen typischen Verlauf einer Versorgungsspannung, die ein Testsignal für den Messfühler aus Figur 1 aufweist,

Fig. 4 zeigt ein Teil des Verlaufs der Versorgungsspannung aus Fig. 3 in vergrößerter Darstellung,

Fig. 5 zeigt eine Antwort des Messfühlers 1 auf einen Versorgungsspannungsverlauf gemäß Figur 3,

Fig. 6 zeigt einen Querschnitt durch eine Leiterplatte, auf der der Messfühler nach Fig. 1 aufgebaut ist,

Fig. 7 zeigt eine Draufsicht auf eine Schaltkarte für die Leiterplatte nach Fig. 6,

Fig. 8 zeigt einen Querschnitt durch einen ersten Teil eines erfindungsgemäßen Messfühlers,

Fig. 9 zeigt einen Querschnitt durch einen weiteren Teil eines Messfühlers nach Fig. 8,

Fig. 10 zeigt ein schematisches Schaltbild eines Teils eines Messfühlers,

Fig. 11 zeigt ein schematisches Schaltbild eines Teils des erfindungsgemäßen Messfühlers,

Fig. 12 zeigt einen Signalverlauf für Komponenten des Messfühlers aus Figur 11,

Fig. 13 zeigt ein Blockschaltbild, das den Messfühler nach Fig. 1 veranschaulicht, und

Fig. 14 zeigt ein Blockschaltbild, das die Messfühler nach Figur 10 und Figur 11 sowie eines weiteren Messfühlers veranschaulicht.

Bei allen folgenden Schaltungsbeschreibungen werden für das Verständnis der Funktion der betreffenden Schaltung nicht notwendige Bauteile weggelassen. Hierzu zählen beispielsweise passive Bauteile, die einer Überlastung der anderen Bauteile entgegenwirken, wie beispielsweise Strombegrenzungswiderstände, EMV-Komponenten, Siebkondensatoren, Verpolungsschutzdioden u.ä.

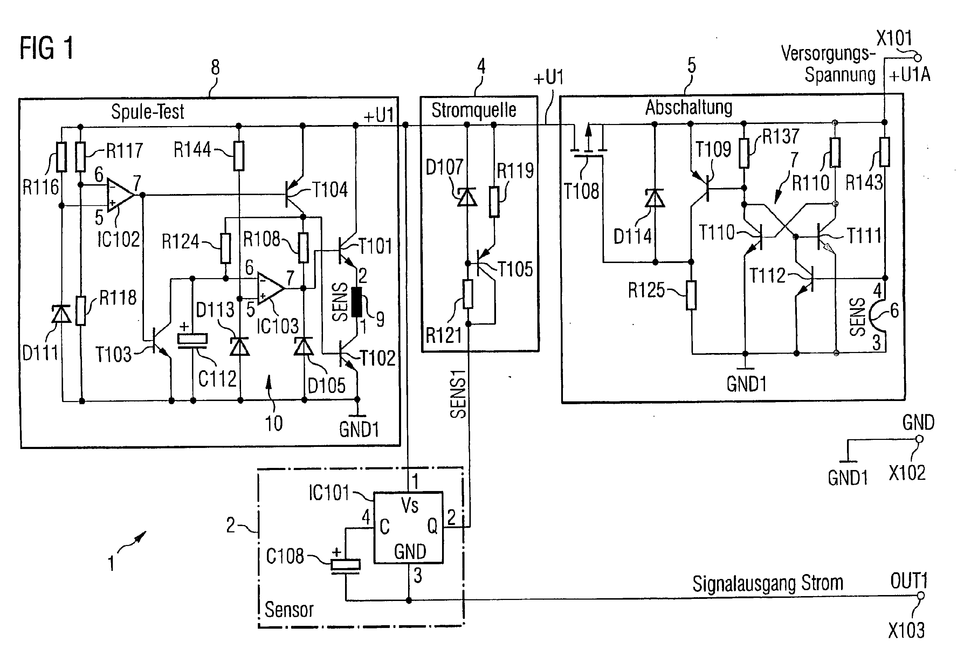

Figur 1 zeigt ein schematisches Schaltbild eines ersten Messfühlers 1, der als Impulsgeber in Verbindung mit einem hier nicht gezeigten Zahnrad auf einer Achse eines Schienenfahrzeugs angeordnet ist.

Der Messfühler 1 weist einen Versorgungsspannungsanschluss X101 zur Beaufschlagung mit einer Spannung $V_s$, einen Masseanschluss X102 und einen Signalausgangsanschluss X103 auf. Der Masseanschluss X102 zieht sich als zentrale Masse GND1 durch die gesamte Schaltung des Messfühlers 1.

In einer hier nicht gezeigten Ausführungsform sind nur zwei Schnittstellenanschlüsse vorgesehen. Dann wird das Ausgangssignal als Funktion der Gesamtstromaufnahme gebildet.

In dieser Ansicht ist nicht dargestellt, dass der Messfühler 1 zwei identische Schaltungen gemäß Figur 1 aufweist. Dies erfolgt zur Redundanz, zum Vergleich und für eine hier nicht veranschaulichte Generierung eines entsprechenden korrigierten Gesamt-Ergebnissignals aus zwei Einzel-Ausgangssignalen.

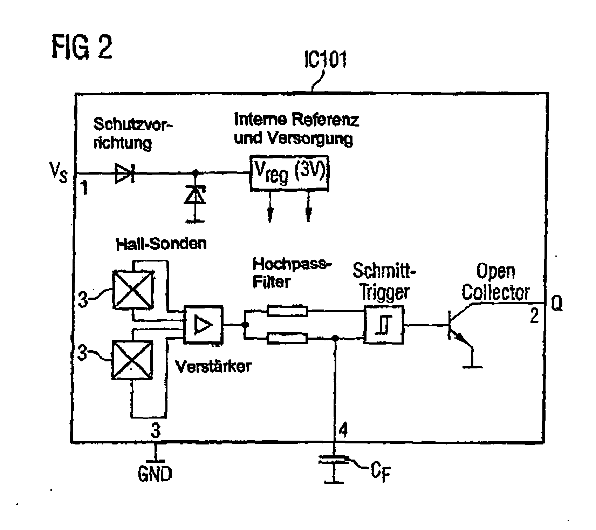

Der zentrale Teil der Schaltung wird durch einen Sensor 2 gebildet. Als Sensorelement dient ein Hall-Sensor IC101, dessen Schaltung in Figur 2 schematisch dargestellt ist. Dieser Baustein liefert ein digitales Ausgangssignal ("open collector"). Es wird die magnetische Flussdichtedifferenz zwischen den beiden auf dem Baustein integrierten Hall-Elementen ausgewertet. Wird eine Differenz von mehr als 2,5 mT überschritten, so schaltet ein Ausgangstransistor den Ausgang des Hall-Sensors IC101.

Um die Zähne eines nicht-magnetischen Zahnrads, das im wesentlichen kein Magnetfeld erzeugt, detektieren zu können, wird ein hier nicht gezeigter Dauermagnet auf der Rückseite des Hall-Sensors IC101 aufgeklebt wird. Der Dauermagnet ist so groß, dass er gleich alle beide Hall-Sensoren IC101 abdeckt (z.B. Doppelgeber), nämlich das IC101 und eine hier nicht dargestelltes weiteres IC einer weiteren Schaltung. Dies erfolgt so, weil bei zwei Einzelmagneten eine gegenseitige Beeinflussung erfolgen könnte (Abstoßung oder Verzerrung des magnetischen Feldes). Das Zahnrad ist so im Bereich **der Hall-Sonden** 3 des Sensorelements IC101 angeordnet, dass dessen Zähne an **den Hall-Sonden** 3 vorbeistreichen, ohne diese zu berühren. Die Zähne der Zahnrads bewirken dabei eine Magnetfeldänderung. Dies erkennt der Hall-Sensor IC101 und schaltet dementsprechend seinen Ausgang "Pin 2".

Mittels des Kondensators C108 wird die untere Grenzfrequenz des Sensorelements festgelegt. Es sollen Impulse bis zu 1Hz erkannt werden. Also wurde die Grenzfrequenz auf 1 Hz gelegt.

Mit einer hier nicht gezeigten Tiefpaßschaltung aus einem am Anschluss Vs angeordneten Widerstands und einem zwischen den Anschlüssen "1" und "3" bzw. "4" angeordneten Kondensator wird ggf. ein EMV-Schutz für das Sensorelement IC101 vorgesehen.

Die Stromquelle 4 wird durch einen npn-Transistor T105, durch zwei Widerstände R119 und R121 sowie durch eine Referenz-Zenerdiode D107 gebildet, die wie in Figur 1 gezeigt zwischen der Versorgungsspannung $V_s$ und den Anschluß "Pin 2" des Hall-Sensors IC101 verschaltet sind. Schaltet der Ausgangstransistor (open collector) des Hall-Sensors IC101 nach "Low", so fließt ein Strom durch die Referenz-Z-Diode D107, den Widerstand R121 und der Basis des Transistors T105. Am Widerstand R119 liegt die Spannung der Referenz-Z-Diode an. Daraus ergibt sich ein vorbestimmter Stromfluß am Emitter des Transistors T105. Es ist auch denkbar, diesen Strom durch mehrere Transistoren bereitzustellen, wenn die Wärmebelastung für den Transistor T105 zu groß ist. Dies kann durch einen zweiten, hier nicht gezeigten pnp-Transistor erfolgen, dessen Basis mit dem Kollektor des Transistors T105 verbunden ist und dessen Kollektor mit der Basis des Transistors T105 verbunden ist. Der Emitter dieses Transistors ist mit dem Anschluß "2" des Hall-Sensors IC101 verbunden.

Der Strom durch die Stromquelle 4 und der Speisestrom des Hall-Sensors IC101 - der Eigenbedarf des Bausteins - ergeben den "High"-Wert des Impulsgeberstromsignals, der als eines der beiden vorgesehenen Ausgangssignale am Signalausgangsanschluss X103 anliegt. Ist der Ausgangstransistor des Sensor-ICs IC101 gesperrt, so fließt kein Strom durch die Stromquelle. Es fließt nur der Speisestrom des Sensor-ICs IC101. Dieser stellt den "Low"-Wert des Impulsgeberstromsignals mit einem vorbestimmten Wert dar, der als das andere der beiden vorgesehenen Ausgangssignale am Signalausgangsanschluss X103 anliegt.

Mit den vorbeschriebenen Komponenten, fachgerechte Umsetzung und Vorsehen von zusätzlichen üblichen passiven Bauteilen vorausgesetzt, ist der Messfühler 1 betriebsbereit. Bei Anregung durch das sich mit einer bestimmten Frequenz drehende Zahnrad wird ein Rechteckstrom erzeugt, dessen Frequenz sich aus dem Produkt der Drehfrequenz und der Zähnezahl des Zahnrads ergibt.

Zur Erkennung eines Defekts im Bereich einer Sensorspitze, in der der Sensor 2 angeordnet ist, wird die Versorgungsspannung Vs durch einen Zerstörungsdetektor 5 abgeschaltet. Zur Erkennung eines Defekts ist eine Sens-Leiterbahn 6 im Bereich des Sensors vorgesehen, deren Zustand von einem Flip-Flop 7 abgetastet wird, das einen FET T108 betätigt.

Nach dem Einschalten des Messfühlers durch Anlegen der Versorgungsspannung Vs ist ein npn-Transistor T110 des Flip-Flops 7 gesperrt. Wenn T110 sperrt, dann wird der npn-Transistor T111 über einen Widerstände R137 und über einen nicht gezeigten Basiswiderstand leitend. Dies führt dazu, daß der Transistor T110 gesperrt bleibt. Aufgrund des Sperrens von T110, sperrt auch der pnp-Transistor T109, so daß durch die Z-Diode D114 über den Widerstand R125 ein Strom fließt und es entsteht am Feldeffekttransistor T108 eine vorbestimmte GS-Spannung. Diese reicht aus, den FET T108 durchzuschalten und nachgeschaltene Fuktionsblöcke des Messfühlers 1 mit Energie zu versorgen.

Kommt es nun vor, daß der Messfühler beschädigt wird, indem ihn das sich drehende Polrad bzw. Zahnrad "abfräst", so wird die Sens-Leiterbahn 6 auf einer hier nicht gezeigten Trägerplatine unterbrochen. Dadurch lädt sich ein hier nicht gezeigter Kondensator über Widerstände auf und der npn-Transistor T112 wird leitend. Der npn-Transistor T111 sperrt und der npn-Transistor T110 wird über den Widerstand R110 und über einen weiteren, hier nicht gezeigten Widerstand leitend. Wenn der Transistor T110 leitet, sperrt der Transistor T111. Das Sperren von T111 erfolgt dann unabhängig davon, ob die Leiterbahn auf der Trägerplatine unterbrochen bleibt, oder aber ob z.B. durch das leitende Polrad (Zahnrad) wieder eine leitende Verbindung entsteht (gespeicherter Zustand). Es ist nämlich zwischen der Basis des Transistors T112 und dem Anschluß "3" der Sens-Leiterbahn 6 ein hier nicht dargestellter Kondensator vorgesehen, der durch das Wiederleitendwerden der Sense-Leiterbahn 6 entladen wird. Dieses Entladen wird mittels eines geeigneten, hier nicht dargestellten Widerstandes verzögert.

Der Transistor T110 bleibt fortan leitend. Daher wird der pnp-Transistor T109 über einen hier nicht dargestellten Widerstand ebenfalls leitend und schließt die Z-Diode D114 kurz, wodurch der FET T108 sperrt. Die nachfolgenden Schaltungsblöcke, insbesondere die Stromquelle 4, sind somit spannungslos. Dadurch ist es nicht möglich, dass der Messfühler 1 Impulse abgibt, die aufgrund eines Defekts entstehen und eventuell zu Fehlinterpretationen in der übergeordneten Auswerteeinheit führen, an die der Messfühler 1 angeschlossen ist.

Bereits ein kurzzeitiges Unterbrechen der Sens-Leiterbahn 6 ist ausreichend, um den Messfühler 1 dauerhaft zu deaktivieren. Der gespeicherte Abschaltzustand wird beim Aus-/Einschalten der Versorgungsspannung wieder aufgehoben. Liegt nach dem Einschalten der Versorgungsspannung der Zustand einer aufgetrennten Sens-Leiterbahn immer noch vor, so wird die Versorgungsspannung für die nachfolgenden Schaltungsblöcke wieder abgeschaltet, und zwar wie oben beschrieben.

Der Messfühler 1 weist noch eine Sensortestschaltung 8 auf, mit der der Sensor 2 selektiv stimuliert werden kann. Dies wird durch ein sich in der Flußdichte änderndes Magnetfeld erreicht, das von einer Stimulusspule 9 erzeugt wird. Dieses Magnetfeld simuliert ein sich drehendes Polrad (Zahnrad), das normalerweise während der Fahrt beispielsweise eines Zuges für eine Magnetfeldänderung sorgt, wie oben beschrieben wurde.

Mittels dieser Magnetfeldstimulation läßt sich der Sensor 2 auf seine Funktion hin testen. Für den Fall, daß der Sensor 2 an einem Schienenfahrzeug eingesetzt wird, wird die Testfunktion nach erfolgtem Stillstand des Schienenfahrzeugs angestoßen und dauert ca. 5 Sekunden. Um sich von einem periodischen Signal (Frequenzsignal während der Fahrt) zu unterscheiden, wird ein Stimulus in der Form eines speziellen Codes verwendet, der auf die Versorgungsspannung Vs aufmoduliert wird.

Im Testbetrieb wird die Versorgungsspannung von 15V (Normalbetrieb) zeitweise auf 21V hochgeschaltet. Die Sensortestschaltung erkennt dies und leitet selbstständig die Aktivierung der Spule ein, was zu einer Magnetfeldänderung führt.

Die Referenz-Z-Diode D111 erzeugt eine von der Versorgungsspannung Vs unabhängige Referenzspannung Vref. Mittels dieser Referenzspannung Vref wird der Schaltpunkt für den OP IC102 - Typ rail-to-rail - festgelegt. Der OP IC 102 vergleicht diese Spannung am "+"-Eingang "5" mit der sich durch den Spannungsteiler R117/R118 ergebenden und von der Versorgungsspannung Vs abhängigen Spannung am "-"-Eingang "6". Er wird hier als "Komparator" eingesetzt, der sowohl nach 0V (Low) wie auch nach $U_b$ (High) schalten kann.

Je nach Gesamttoleranz (Toleranz, Temperatur, Lebensdauer) der verwendeten Bauteile liegt - bezogen auf die Versorgungsspannung - die Schaltschwelle bei ca. 18V. Dies bedeutet, daß bei der Versorgungsspannung im Normalbetrieb von 15,2V der Ausgang des OP IC102 aufgrund seiner rail-to-rail Eigenschaften annähernd den Wert der Versorgungsspannung annimmt. Liegt der Testfall vor, d.h. dass die Versorgungsspannung auf 21,2V hochgeschaltet wird, so schaltet der Ausgang "7" des OP IC102 auf 0V.

Im Testbetrieb (21,2V) ist der OP-Ausgang "7" von IC102 zeitweise auf 0V. Über einen hier nicht gezeigten Widerstand wird der pnp-Transistor T104 angesteuert und er schaltet die Versorgungsspannung Vs durch. Dadurch liegt an der Basis des npn-Transistor T101 eine Spannung an - Z-Diode D105. Gleichzeitig wird über einen hier nicht gezeigten Widerstand der npn-Transistor T102 (T202) leitend gesteuert und er legt das GND-Potential an die Stimulusspule 9. Durch die Stimulusspule 9 fließt somit ein vorbestimmter Strom.

Der Spulenstrom bewirkt eine Flußdichteänderung zwischen den beiden Hallelementen des Sensors IC 101 von ≥2,5mT.

Um eine Beschädigung der Stimulusspule 9 durch zu lange Beaufschlagung mit Spulenstrom zu verhindern, falls die Versorgungsspannung versehentlich zu lange auf einem Testniveau gehalten wird, ist eine Sicherheitsabschaltung 10 vorgesehen. Am "+"-Eingang "5" des Komparators IC103 liegt eine vorbestimmte Spannung an, die mittels einer Referenz-Z-Diode D113 erzeugt wird. Über einen Widerstand R124 wird der Kondensator C112 aufgeladen. Wird nun am "-"-Eingang "6" des Komparators IC103 die vorbestimmte Spannung überschritten, so schaltet der Komparator IC103 (open collector) seinen Ausgang auf 0V und er schließt die Z-Diode D105 kurz. Dadurch wird die weitere Ansteuerung der Stimulusspule 9 unterbunden.

Im Normalbetrieb, bei dem Vs ca. 15,2V ist, ist der OP-Ausgang "7" von IC102 auf $U_b$. Somit wird über einen nicht gezeigten Widerstand der npn-Transistor T103 leitend. Dies bewirkt, dass der für die Abschaltung der Spulenansteuerung notwendige Kondensator C112 entladen wird. Der pnp-Transistor T104 sperrt. Die Stimulsspule 9 erhält keinen Strom.

Der Stromfluß der Stimulusspule wird im Normalbetrieb unterbunden. Die GND-Anbindung der Spule wird mit dem npn-Transistor T102 aufgehoben. Dieser sperrt, da der pnp-Transistor T104 sperrt. Aufgrund des Sperrens des Transistors T104 sperrt auch der npn-Transistor T101. Zudem kann eine Diode vor der Stimulusspule ebenfalls einen ungewollten Stromfluß durch die Stimulusspule 9 im Normalbetrieb verhindern.

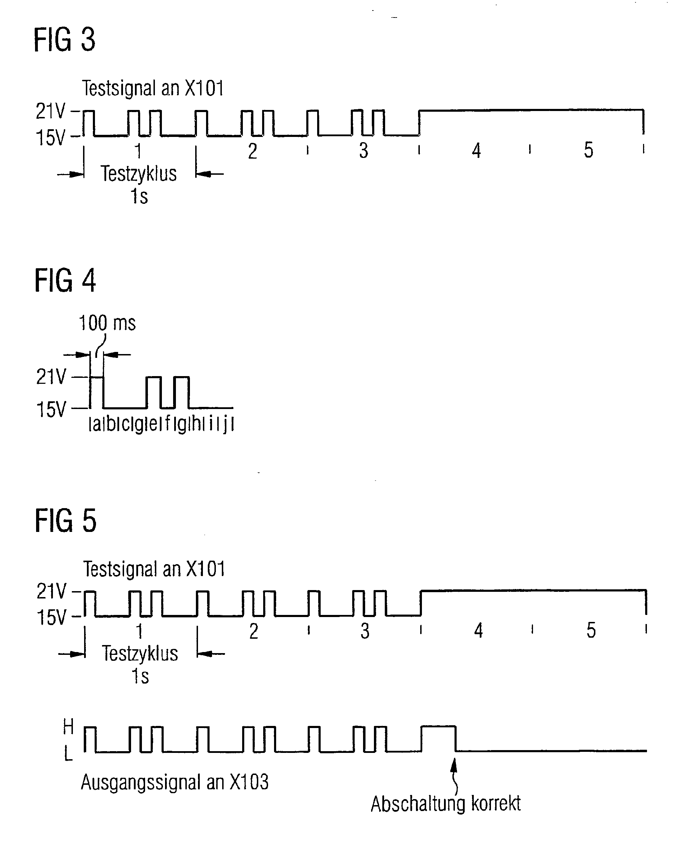

Fig. 3 zeigt einen typischen Verlauf einer Versorgungsspannung, die ein Testsignal für den Messfühler aus Figur 1 aufweist. Fig. 4 zeigt einen Teil der Versorgungsspannung aus Fig. 3 in vergrößerter Darstellung. Das Testsignal wurde in Fig. 3 in fünf Bereiche "1" bis "5" unterteilt, die jeweils eine Dauer von 1s wiedergeben.

Das Testsignal hat zwei Funktionen. Zum einen wird dem Sensor 2 ein sich veränderndes Magnetfeld vorgegeben (Testzyklen 1 bis 3). Hiermit lässt sich das Sensorelement und die hier nicht dargestellte, nachgeschaltete Signalanpassung überprüfen. Dieser Test dauert ca. 3s. Die Testzyklen 4 und 5 (21V Dauersignal) dienen dazu, die Sicherheitsabschaltung 10 zu testen. Dies ist wichtig, da dadurch eine Überlastung der Spule verhindert wird. Die Testzyklen 4 und 5 dauern zusammen ca. 2s. Nach ca. 500ms muß die Sicherheitsabschaltung 10 der Stimulusspule 9 aktiv werden. Da das Testsignal gemäß Figur 3 und 4 und die zu erwartende Antwort des Sensors 9 gemäß Figur 5 bekannt sind, lässt sich in der übergeordneten Auswerteeinheit ein Vergleich der beiden Signale durchführen und entsprechend bewerten.

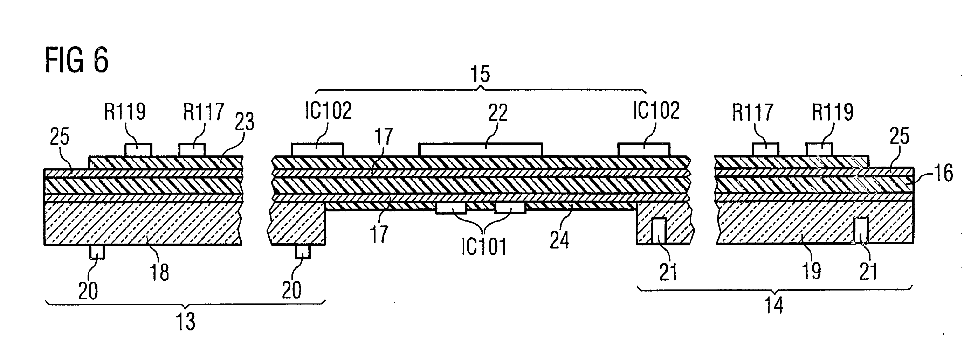

Figur 6, Figur 7, Figur 8 und Figur 9 veranschaulichen den mechanischen Aufbau des Messfühlers 1.

Figur 6 zeigt dabei eine Platine 12, auf der zwei Schaltungen gemäß Figur 1 untergebracht sind.

Die Platine 12 gliedert sich in einen ersten starren Leiterplattenbereich 13, in einen zweiten starren Leiterplattenbereich 14 sowie in einen flexiblen Leiterplattenbereich 15, der zwischen dem ersten starren Leiterplattenbereich 13 und dem zweiten starren Leiterplattenbereich 14 ausgebildet ist. Die Platine 12 weist dabei eine durchgehende Polyimidfolie 16 auf, die leicht biegsam ist.

Die Polyimidfolie 16 ist auf ihrer Oberseite und auf ihrer Unterseite mit Leiterbahnen 17 aus Kupfer versehen. Untenseitig hat die Platine 12 in der in Figur 6 linksseitigen Hälfte einen ersten steifen Glasfaserkartenbereich 18 und rechtsseitig einen zweiten Glasfaserkartenbereich 19. Der erste Glasfaserkartenbereich 18 ist untenseitig mit zwei Zentriernoppen 20 versehen, die in Zentrieröffnungen 21 im zweiten Glasfaserkartenbereich 19 einsteckbar sind. Hierzu bildet der flexible Leiterplattenbereich 15 eine Art Scharnier, um die der erste starre Leiterplattenbereich 13 und der zweite starre Leiterplattenbereich 14 geschwenkt werden können.

Auf der Oberseite der Platine 12 ist im flexiblen Leiterplattenbereich 15 ein Sensor-Stimulator 22 aufgesetzt. Der Sensor-Stimulator 22 bildet einen Teil der Sensortestschaltung 8 aus Figur 1. Auf der Unterseite der Platine 12 sind im flexiblen Leiterplattenbereich 15 die beiden Sensorelemente IC101 der beiden Schaltungen gemäß Figur 1 vorgesehen.

Außerdem sind noch weitere Bauelemente der Schaltungen gemäß Figur 1 vorgesehen, und zwar sowohl auf dem flexiblen Leiterplattenbereich 15 als auch auf dem ersten starren Leiterplattenbereich 13 und dem zweiten starren Leiterplattenbereich 14. Die Oberseite der Platine 12 ist mit einer Lötstoplackschicht 23 versehen. Auf der Unterseite der Platine 12 ist im flexiblen Leiterplattenbereich 15 eine Deckfolie 24 angebracht. Auf der Oberseite der Platine 12 sind randseitig Kontaktzungen 25 von der Lötstoplackschicht 23 freigelassen.

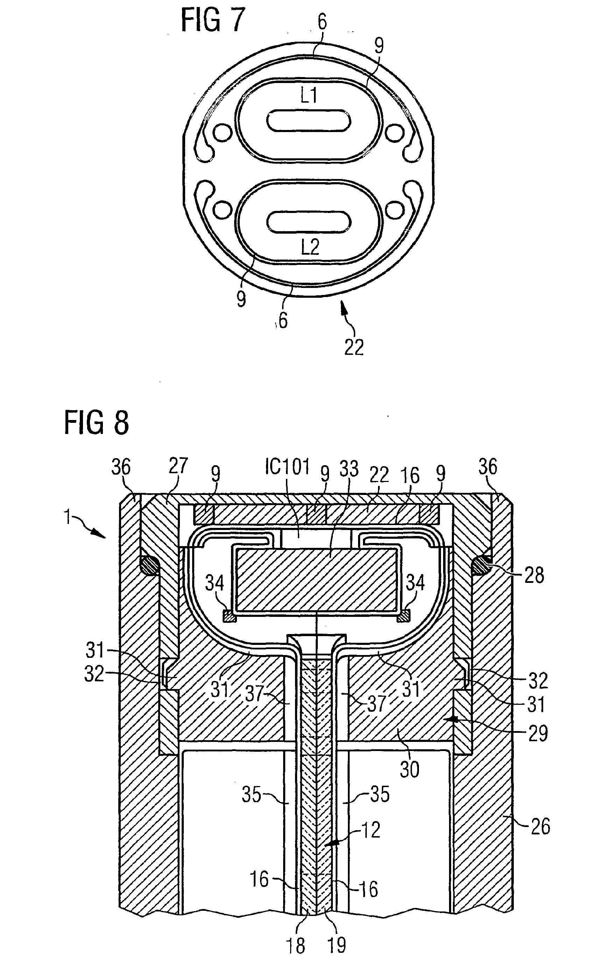

Figur 7 zeigt eine Draufsicht auf den Sensor-Stimulator 22 aus Figur 1. Der Sensor-Stimulator 22 ist auf einem Leiterplattenisolationsmaterial aufgebaut, auf dem die beiden Sens-Leiterbahnen 6 aus Figur 1 aus Kupfer aufkaschiert sind. Der Sensor-Stimulator 22 weist dabei zwei Vertiefungen für die beiden Spulen 9 auf, die in diese Vertiefungen eingepasst sind. Die Spulen 9 sind über in dieser Ansicht nicht gezeigte Durchkontakte auf die Unterseite des Sensor-Stimulators 22 verbunden. Dort werden sie auf der Platine 12 angelötet. Ebenso sind die beiden Sens-Leiterbahnen 6 an deren Enden mit Durchkontakten verbunden, an denen sie mit der Platine 12 verbunden werden.

Figur 8 zeigt einen Teilbereich des montierten Messfühlers 1 in vergrößerter geschnittener Darstellung. Der Messfühler 1 weist ein Außenrohr 26 aus Stahlblech oder Aluguss mit einer darin angeordneten Abschlusskappe 27 aus Kunststoff, Messing oder Alu auf. Die Abschlusskappe 27 ist mit einem O-Ring 28 gegenüber dem Außenrohr 26 abgedichtet. Im Inneren der Abschlusskappe 27 ist eine Haltekappe 29 für die Platine 12 vorgesehen. Dabei gliedert sich die Haltekappe 29 in zwei Kappenschalen 30, die sich jeweils komplementär ergänzen.

Dabei ist in den Kappenschalen 30 ein Flexfolienkanal 31 freigelassen, der den flexiblen Leiterplattenbereich 15 der Platine 12 aufnimmt. Rastnasen 31 der Haltekappe 29 greifen dabei in Rastöffnungen 32 in der Abschlusskappe 27 ein.

Wie man in dieser Ansicht besonders gut sieht, wird in der Haltekappe 29 ein Dauermagnet 33 gehalten. Kantenschutzstege 34, die als Bestandteil der Kappenschalen 30 ausgeformt sind, verhindern dabei, dass die Flexfolie der Leiterbahn 17 am Dauermagnet 33 scheuert.

Es bleibt noch zu erwähnen, dass auf der Innenseite des Außenrohrs 26 Führungsschienen 35 vorgesehen sind, in denen der erste Glasfaserkartenbereich 18 und der zweite Glasfaserkartenbereich 19 geführt sind.

An der Oberseite des Außenrohrs 26 sind noch Bördelkanten 36 ausgebildet, die in einem hier nicht veranschaulichten Umformungsschritt so umgebördelt werden, dass die Abschlusskappe 27 fest im Außenrohr 26 verankert ist.

Durchtrittskanäle 37 gewähren einen Durchtritt beispielsweise von flüssigem Klebstoff zwischen dem Bereich des Dauermagnet 33 und der Innenseite des Außenrohrs 26 unterhalb der Haltekappe 29.

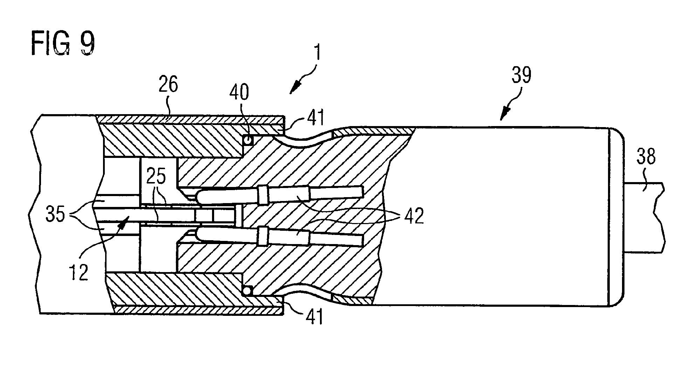

Figur 9 zeigt einen Abschnitt des Messfühlers 1, der gegenüber dem in Figur 8 gezeigten Bereich am anderen Ende des Außenrohrs 26 gelegen ist. Wie man in dieser Ansicht besonders gut sieht, ist eine mit einem Kabel 38 verbundene Anschlusskappe 39 in das andere Ende des Außenrohrs 26 eingesteckt. Die Anschlusskappe 39 ist aus Kunststoff gefertigt und mit einem O-Ring 40 gegenüber dem Außenrohr 26 abgedichtet. Bördelbereiche 41 des Außenrohrs 26 werden in einem hier nicht gezeigten Herstellungsschritt umgebördelt und halten die Anschlusskappe 39 fest im Außenrohr 26. Das Kabel 38 mündet in Kontaktfedern 42, von denen je zwei einen Klammerkontakt bilden. Die Kontaktfedern 42 treten jeweils mit einer Kontaktzunge 25 in Kontakt. Zur Erzielung der Feder- und Klemmwirkung sind die Kontaktfedern 42 schräg in der Anschlusskappe 39 angeordnet. Es handelt sich um gedrehte Kontakte, an die die Einzellitzen des Kabels 38 angecrimpt. Die Kontaktfedern 42 sind dabei in der als Formteil ausgebildeten Anschlusskappe 39 eingegossen.

Über ein hier nicht gezeigtes Kodierelement in Form einer Kodiernut an der der Platine 12, am Sensorgehäuse in Form des Außenrohrs 26 und an der Anschlusskappe 39 ist ein richtiges Einsetzen und verpolungssicherer Betrieb der Anschlusskappe 39 an der Platine 12 gewährleistet.

Zur Montage des Messfühlers 1 wird dabei wie folgt vorgegangen. Zunächst wird die Platine 12 mit zwei Messfühlerschaltungen gemäß Figur 1 und der Bestückung gemäß Figur 6 und Figur 7 hergestellt. Die Platine 12 wird dann so umgebogen, dass der erste Glasfaserkartenbereich 18 am zweiten Glasfaserkartenbereich 19 anliegt. In diesem zustand werden die beiden Halbschalen bezüglich der Platine 12 positioniert und zusammengefügt. Dabei wird der Dauermagnet 33 zwischen die beiden Kappenschalen 30 eingefügt. In einer bevorzugten Ausführungsform kann Klebstoff in dem Bereich zwischen die beiden Kappenschalen 30 eingebracht werden. Nach dem Aushärten des Klebstoffs kann der so fertig gestellte Teil des Messfühlers 1 geprüft werden, und zwar auf seine mechanische und elektrische Funktion.

Anschließend wird die Platine 12 in das Außenrohr 26 eingeschoben. Die Abschlusskappe 27 wird über die aus den beiden Kappenschalen 30 gebildete Haltekappe 29 gestülpt, bis die Rastnasen 31 in den Rastöffnungen 32 einrasten, wie es in Figur 8 gezeigt ist. Anschließend wird der Börtelbereich 36 umgebördelt. Danach wird der Messfühler 1 geprüft. Zur Endmontage wird die Anschlusskappe 39 auf die Platine 12 aufgesteckt und der Bördelbereich 41 umgebördelt.

In einem hier nicht gezeigten Ausführungsbeispiel kann die Anschlusskappe 39 auch als abgewinkelte Anschlusskappe ausgeführt sein.

Hinter der Kunststoffkappe 27 ist eine Trägerplatine integriert, die unteranderem zur Aufnahme der Spulen dient. Auf dieser Trägerplatine ist pro Geber eine Sens-Leiterbahn aufgebracht.

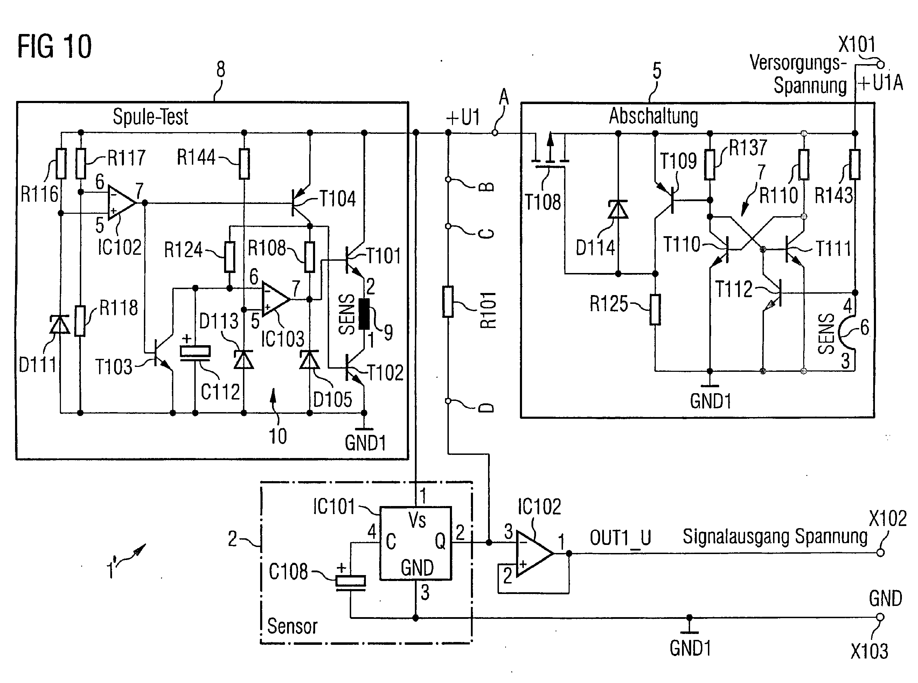

Fig. 10 zeigt ein schematisches Schaltbild eines Messfühlers 1'. Der Messfühler 1' stimmt in wesentlichen Teilen mit dem Messfühler 1 aus Fig. 1 überein. Gleiche Bestandteile haben die selben Bezugsziffern. Der Messfühler 1' arbeitet mit einem Signalausgangsanschluss X102, an dem eine veränderliche Spannungshöhe ausgegeben wird. Am Masseanschluss X103 wird eine systemweite Masse angelegt.

Das Ausgangssignal des Sensorbausteins IC101 ist das Eingangssignal eines als nicht-invertierenden Verstärker beschalteten OP IC102 mit rail-to-rail Ausgang. Hier nicht gezeigte Widerstände bestimmen die Verstärkung des OP IC102. Außerdem ist ein Widerstand als Schutzwiderstand gegen EMV-Störungen und zur Leistungsreduzierung des Verstärkers im Fall eines Kurzschlusses an den Ausgangspins vorgesehen.

Schaltet der Ausgangstransistor des Sensorbauteils IC101 aufgrund einer Anregung an den Hall-Sonden 3 gem. Fig. 2, so schaltet der Ausgang "1" des OP IC102 auf "Low". Somit liegt am Ausgangsspannungspin X104 des Gebers "Low"-Signal (0V).

Sperrt der Ausgangstransistor des Hall-Sensors IC101, so schaltet der OP IC102 aufgrund eines nicht gezeigten pull-up Widerstands auf "High". Somit liegt am Ausgangsspannungspin X102 des Gebers "High"-Signal ($U_b$).

Der OP IC102 (IC202) bietet die Möglichkeit, einen begrenzten Strom am Ausgangspin X102 des Messfühlers 1' fließen zu lassen. Dieser Fall wird als "Pegelanpassung" bezeichnet.

Der Messfühler 1 und der Messfühler 1' können mit derselben Platine aufgebaut werden, wenn dafür Leiterbahnen und Drahtbrücken vorgesehen werden. Um ausgehend vom Messfühler 1' zum Messfühler 1 zu kommen, wird zunächst einfach das IC102 weggebrücke durch die z-Diode D107 ersetzt. Der Widerstand R101 wird durch den Widerstand R121 ersetzt und der Widerstand R119 wird zusammen mit dem Transistor T105 zwischen die Punkte "A", "C" und "D" in Fig. 10 geschaltet.

Eine weitere Anwendung ergibt sich dann, wenn ausgehend vom Messfühler 1' aus Fig. 10 ein hier nicht dargestellter Messfühler bereitgestellt wird, der einen sog. "Transistorausgang" aufweist. Durch entsprechende Brückenbeschaltung und Minderbestückung der Leiterplatte besteht die Möglichkeit, das Ausgangssignal des Sensorbauteils IC101 direkt als Ausgangssignal des Messfühlers zu verwenden, das am Ausgangsanschluss X102 angelegt wird. Der Anschluss X103 wird stattdessen als Systemmasse GND verwendet. Der angesteuerte Ausgangstransistor des Sensors 2 sorgt für ein "Low"-Signal, pull-up Widerstand zwischen den Anschlüssen "1" und "2" sorgt bei einem gesperrten Ausgangstransistor von IC101 für ein "High"-Signal am Ausgang. Außerdem kann ein Widerstand zwischen Anschluss "2" von IC101 und dem Anschluß X102 als Schutzwiderstand gegen EMV-Störungen und dient auch zur Reduzierung des Kurzschlußstroms am Ausgangspin.

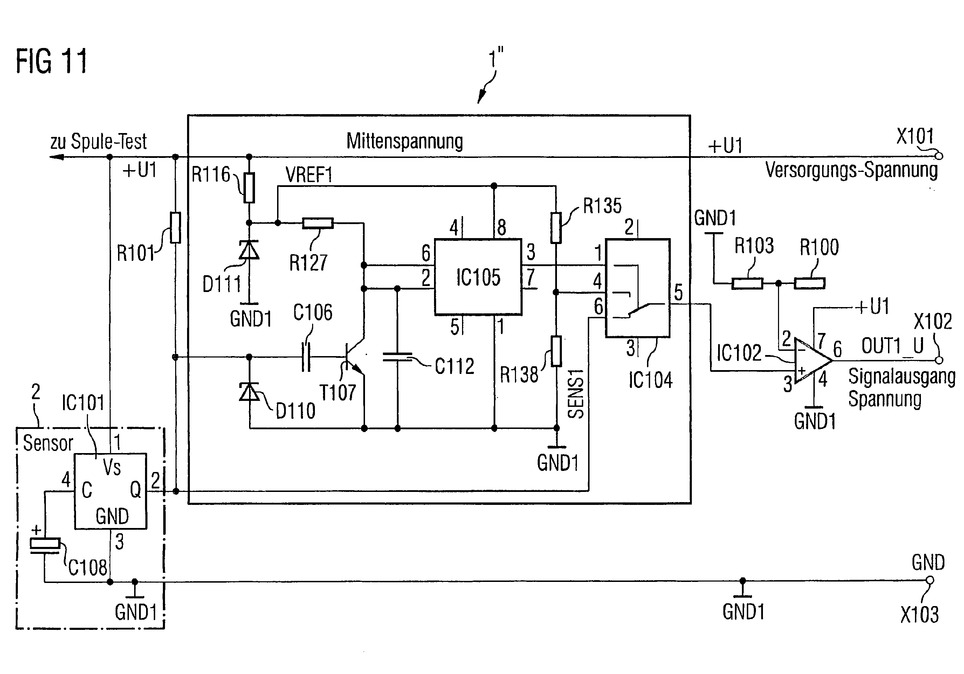

Fig. 11 zeigt ein schematisches Schaltbild eines Teils des erfindungsgemäßen Messfühlers 1". Der Messfühler 1" ist so konfiguriert, dass er als Funktionszeichen eine sog. "Mittenspannung" abgibt, wenn er im Betrieb den Stillstand eines Fahrzeugs anzeigt: Um eine Unterbrechung oder einen Kurzschluß der Anschlußpins des Gebers erkennen zu können, wird im Stillstand des Zuges beim Impulsgeber mit Mittenspannungsausgang der Ruhepegel auf einen Wert zwischen 6V und 8V gesetzt.

Im Normalbetrieb (Zug fährt) wird vom Impulsgeber ein Frequenzsignal abgegeben, dessen Spannungswert zwischen 0V und der Versorgungsspannung wechselt.

Da ein Teil der Schaltung für die Mittenspannungserzeugung, nämlich das Monoflop IC105 und der analoge Schalter bzw. MUX/Switch IC104, mit 5V arbeitet, wird mittels des Widerstands R116 und der 5V Referenz-Z-Diode D111 aus der Versorgungsspannung Vs für diese Bauelemente eine Versorgungsspannung von 5 V erzeugt.

Über den Widerstand R101 und der Z-Diode D110 wird das Ausgangssignal des Sensors IC101 (open collector - Ausgang "2") auf einen Pegel zwischen 4,7V (Ausgangstransistor des Sensors sperrt) und 0V (Ausgangstransistor des Sensors leitet) begrenzt. Dadurch wird der npn-Transistor T107 angesteuert. Über einen nicht gezeigten Widerstand wird der Kondensator C112 entladen. Dies geschieht bei jeder ansteigenden Flanke des vom IC101 abgegebenen Frequenzsignals. Eine hier nicht gezeigte Diode begrenzt negative Schaltspitzen, die bei der fallenden Flanke des Frequenzsignals entstehen. Bleibt die Ansteuerung des npn-Transistors T107 aus, so kann sich der Kondensatoren C112 über den Widerstand R127 aufladen.

Die Schaltzeit $t_1$ des Monoflops ergibt sich aus dem Wert R127 und C112 nach der Gleichung

$$t_1 = \ln 3 * R * C$$

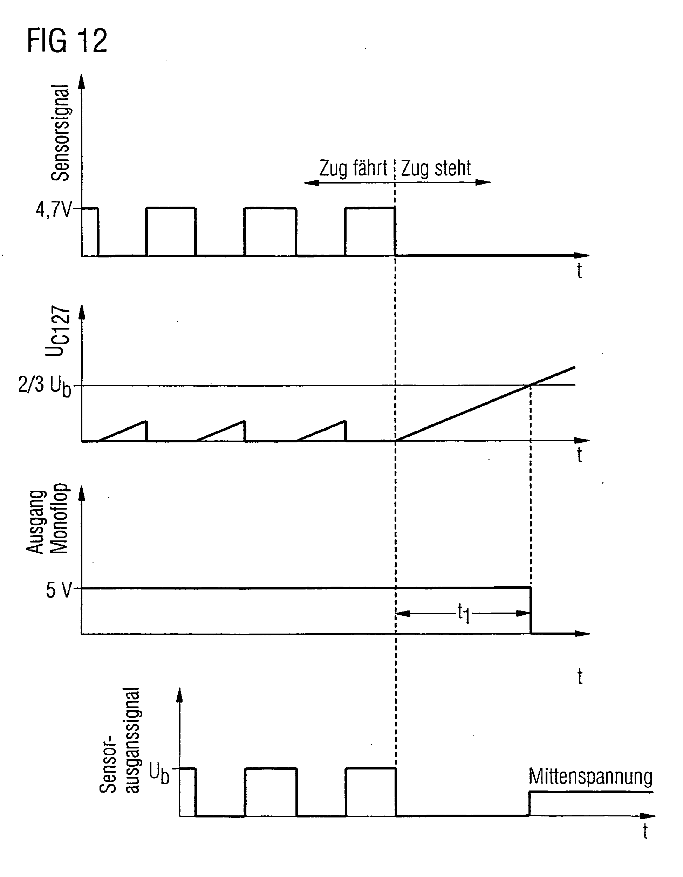

Wird der Transistor T107 vor Ablauf der Zeit $t_1$ wieder leitend, so ist das Monoflop wieder zurückgesetzt (retriggerbar). Im Normalfall (Fahrbetrieb) wird das Monoflop ständig regetriggert, so daß der Ausgang des IC105 auf "High" (5V) bleibt. Erfolgt kein retriggern (Zugstillstand), so geht der Ausgang auf "Low" (0V), wie in Figur 12 in der mittleren Kurve auf der rechten Seite veranschaulicht ist.

Das Ausgangssignal des Monoflops IC105 steuert den Analogschalters IC104 an. Bei einem "High"-Signal (d.h. Fahrbetrieb detektiert) am Steuereingang "1" des Analogschalters IC104 dessen Eingang "6" bzw. das Frequenzsignal des Sensors 2 an den nachfolgenden "+"-Eingang des OP IC102 durchgeschaltet. Im Fall des Zugstillstands liegt die über den Spannungsteiler R135 und R138 eingestellte Spannung am OP IC102 an, denn der Schalter IC104 reicht das an seinem Eingang "Pin 4" anliegende Signal durch. Es ergibt sich hierbei eine sog. "Vormittenspannung". Die sich letztendlich ergebende Mittenspannung wird mittels des Verstärkungsfaktors des OP IC102 festgelegt. Die Verstärkung wird durch die Widerstände R103 und R100 vorgegeben. Der Verstärkungsfaktor wurde so groß gewählt, dass das auf 4,7V geklemmte interne Sensorsignal am Sensorausgang X102 sicher im Bereich von 0V bis $U_b$ liegt. Für die Mittenspannung bedeutet dies, daß sie nominal einen Wert von ca. 7V annimmt. Ein hier nicht gezeigter Widerstand am Ausgang "Pin 6" des OP IC102 ist ein Schutzwiderstand gegen EMV-Störungen und dient auch zur Leistungsreduzierung des Verstärkers im Fall eines Kurzschlusses an den Ausgangspins X102 und X103.

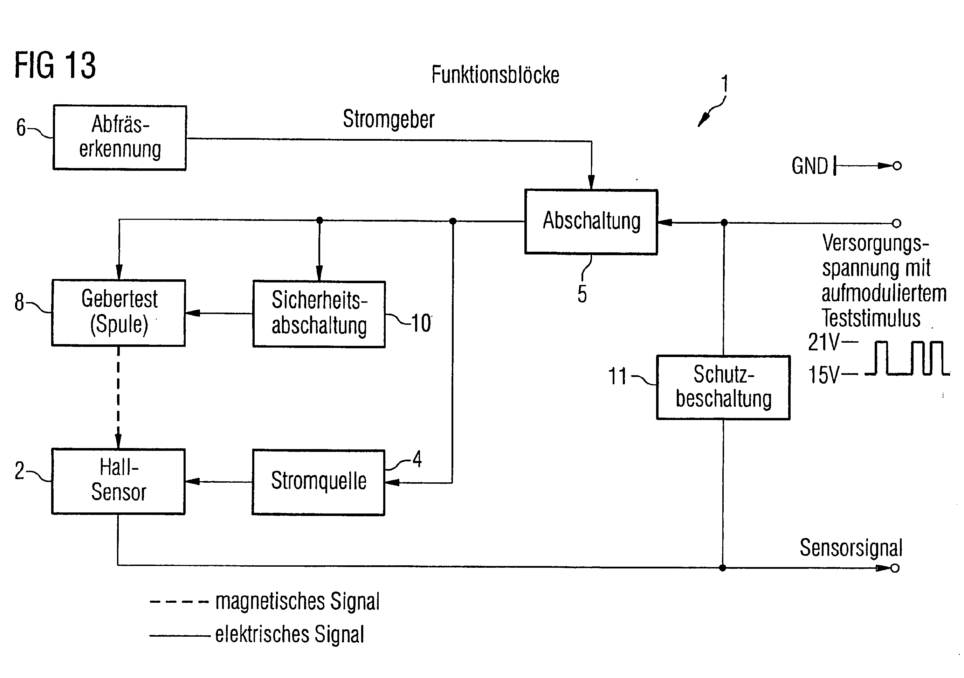

Fig. 13 zeigt ein Blockschaltbild, das die funktionalen Einheiten des Messfühlers 1 nach Fig. 1 sowie deren Zusammenwirken veranschaulicht. Wie man besonders gut in Fig. 13 sieht, ist zusätzlich eine Schutzbeschaltung 11 vorgesehen, die einen Verpolschutz und einen EMV-Schutz beinhaltet.

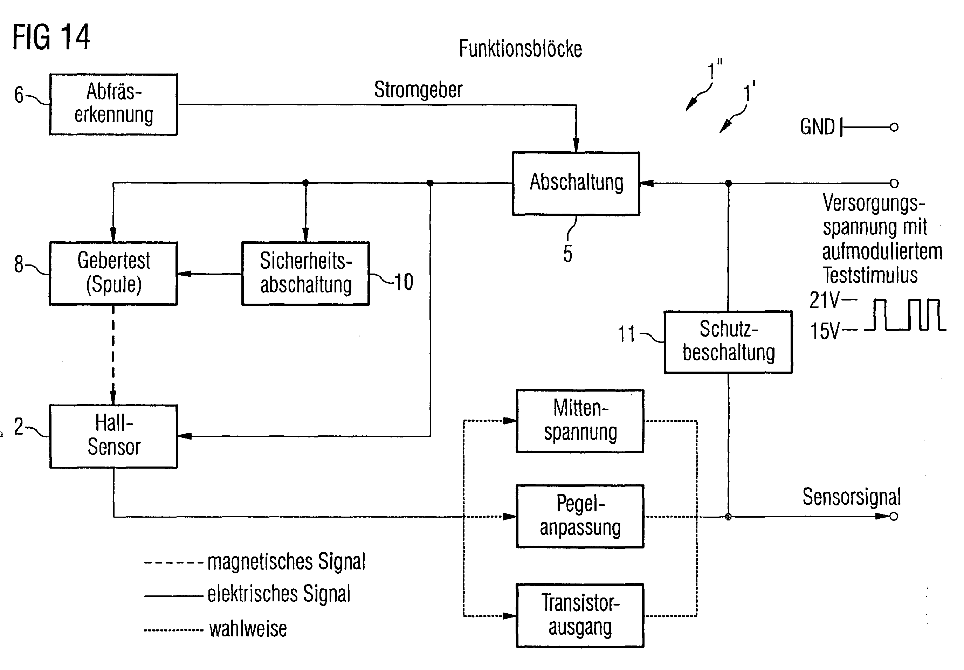

Fig. 14 zeigt ein Blockschaltbild, das die Messfühler nach Figur 10 und Figur 11 sowie eines weiteren Messfühlers veranschaulicht. Zusätzlich ist eine Schutzbeschaltung 11 vorgesehen, die einen Verpolschutz und einen EMV-Schutz beinhaltet.

Wie man besonders gut in Fig. 14 sieht, ist die erfindungsgemäße Anordnung so gewählt, dass die Module "Mittenspannung", "Pegelanpassung" und "Transistorausgang" durch einfache Bestückungsmaßnahmen auf derselben Leiterplatte vorgesehen werden können.

**Patentansprüche**

1. Messfühler (1") mit wenigstens einem elektromagnetischen Sensorbauteil (IC101) zur Erzeugung eines Messsignals und mit einer im Bereich des Sensorbauteils (IC101) angeordneten Stimulusspule (9) zur Erzeugung eines elektromagnetischen Stimulusfeldes für das Sensorbauteil (IC101), wobei im Bereich des Sensorbauteils (IC101) eine digital arbeitende Abtastvorrichtung vorgesehen ist, die das vom Sensorbauteil (IC101) abgegebene Signal daraufhin abtastet, ob es ein vorbestimmtes Messsignal darstellt, und die beim Vorliegen eines solchen vorbestimmten Messsignals an einem Ausgangsanschluss ("3") ein vorbestimmtes Ausgangssignal abgibt, wobei

die Abtastvorrichtung beim Abtasten eines ersten vorbestimmten Messsignals ein erstes vorbestimmtes Ausgangssignal abgibt und beim Abtasten eines zweiten vorbestimmten Messsignals ein zweites vorbestimmtes Ausgangssignal abgibt, **dadurch gekennzeichnet, dass**

die Abtastvorrichtung ein aktivierbares und zurücksetzbares Monoflop (IC105) aufweist, das beim Abtasten des ersten vorbestimmten Ausgangssignals zurückgesetzt wird, wobei das Ausgangssignal des Monoflops (IC105) einen Analogschalter (IC104) ansteuert, der bei getriggertem Monoflop (IC105) die vom Sensorbauteil (2) abgegebene Spannung und bei Ablauf des instabilen Zustands des Monoflops (IC105) eine Mittenspannung an einen Signalausgang des Messfühlers durchschaltet.

**2.** Messvorrichtung mit wenigstens einem Messfühler (1") nach Anspruch 1 und mit einer Auswerteeinheit, wobei die Auswerteeinheit die vom Messfühler abgegebenen Signale mit einem oder mehreren Referenzwerten vergleicht.

## Claims

**1.** Measuring sensor (1") comprising at least one electromagnetic sensor component (IC101) for generating a measuring signal and a stimulus coil (9) disposed in the region of said sensor component (IC101) for generating an electromagnetic stimulus field for said sensor component (IC101), with a digitally operating sensing device being disposed in the region of said sensor component (IC101), which senses the signal issued by said sensor component (IC101) for determining whether it is a predetermined measuring signal, and which, when such a predetermined measuring signal is present, outputs a predetermined output signal on an output connector ("3"), wherein

when a first predetermined measuring signal is sensed, said sensing device issues a first predetermined output signal and, when a second predetermined measuring signal is sensed, issues a second predetermined output signal,
**characterised in that**

said sensing device comprises a one-shot multivibrator element (IC105) adapted to be activated and reset, which is reset when said first predetermined output signal is sensed, with the output signal of said one-shot multivibrator (IC105) controlling an analog switch (IC104) that passes the voltage output by said sensor component (2) when said one-shot multivibrator (IC105) is triggered and, when the unstable state of said one-shot multivibrator (IC105) has expired, a mid-voltage through to a signal output of said measuring sensor.

**2.** Measuring device comprising at least one measuring sensor (1") according to Claim 1 and an evaluating unit, , with said evaluating unit comparing the signals issued by said measuring sensor against one or several reference values.

## Revendications

**1.** Capteur de mesure (1") ayant au moins un composant capteur électromagnétique (IC101) pour la production d'un signal de mesure et ayant une bobine de stimulation (9) agencée dans la zone du composant capteur (IC101) et destinée à produire un champ de stimulation électromagnétique pour le composant capteur (IC101), un dispositif d'échantillonnage numérique étant prévu dans la zone du composant capteur (IC101) pour échantillonner le signal fourni par le composant capteur (IC101) afin de savoir s'il représente un signal de mesure prédéterminé et pour fournir à une borne de sortie ("3") un signal de sortie prédéterminé en présence d'un signal de mesure prédéterminé de ce type,

et le dispositif d'échantillonnage fournissant lors de l'échantillonnage d'un premier signal de mesure prédéterminé un premier signal de sortie prédéterminé et lors de l'échantillonnage d'un deuxième signal de mesure prédéterminé un deuxième signal de sortie prédéterminé,

**caractérisé par le fait que** le dispositif d'échantillonnage comporte une bascule monostable (IC105) qui peut être activée et remise à zéro et qui est remise à zéro lors de l'échantillonnage du premier signal de sortie prédéterminé, le signal de sortie de la bascule monostable (IC105) commandant un commutateur analogique (IC104) qui connecte sur une sortie de signal du capteur de mesure, en cas de bascule monostable (IC105) déclenchée, la tension fournie par le composant capteur (2) et, à la fin de l'état instable de la bascule monostable (IC105), une tension médiane.

**2.** Dispositif de mesure comportant au moins un capteur de mesure (1") selon la revendication 1 et une unité d'évaluation, l'unité d'évaluation comparant les signaux fournis par le capteur de mesure à une ou plusieurs valeurs de référence.

# FIG 1

Spule-Test 8

+U1

R116 R117 R144

6 7
IC102
5

R118
D111

R124 R108

6 7
5
IC103
D113
T103
C112

T104

T101
SENS 2
9
1

T102
D105

10

GND1

Stromquelle 4

+U1

D107 R119

T105

R121

SENS1

Abschaltung 5

+U1

Versorgungs-
Spannung

X101

+U1A

T108

D114

T109 R137

R110 R143

T110 T111

T112

R125

SENS 4
6
3

GND1

GND
GND1 X102

Sensor 2

IC101
1
Vs
4
C Q 2
C108
GND
3

1

Signalausgang Strom

OUT1

X103

EP 1 625 357 B1

## FIG 2

# FIG 3

Testsignal an X101

21V / 15V

1   2   3   4   5

Testzyklus 1s

# FIG 4

100 ms

21V / 15V

|a|b|c|g|e| f |g|h| i | j |

# FIG 5

Testsignal an X101

21V / 15V

1   2   3   4   5

Testzyklus 1s

H / L

Ausgangssignal an X103

Abschaltung korrekt

# FIG 6

R119  R117  23  IC102  15  IC102  R117  R119

25  17  22  25

17  16

20  17  IC101  24  21  20

18  IC101  19  21

20  14

13

EP 1 625 357 B1

## FIG 7

## FIG 8

FIG 9

# FIG 10

**Spule-Test** 8

R116, R117, R144, R118, D111, IC102 (6, 5, 7), R124, R108, T103, C112, D113, IC103 (6, 5, 7), D105, T104, T101, SENS (2, 9, 1), T102, 10, GND1

+U1 A
B
C
R101
D

**Abschaltung** 5

T108, D114, R125, T109, R137, T110, T112, T111, R110, R143, SENS (4, 6, 3), GND1

X101
Versorgungs-
Spannung +U1A

**Sensor** 2

IC101, Vs (1), C (4), Q (2), GND (3), C108, IC102 (3, 1, 2), OUT1_U, Signalausgang Spannung X102

GND1, GND X103

1'

EP 1 625 357 B1

# FIG 11

EP 1 625 357 B1

## FIG 12

Sensorsignal

4,7V

Zug fährt | Zug steht

t

$U_{C127}$

2/3 $U_b$

t

Ausgang Monoflop

5 V

$t_1$

t

Sensor-ausganssignal

$U_b$

Mittenspannung

t

# FIG 13

Funktionsblöcke

1

| 6 ~ | Abfräs-erkennung |

Stromgeber

GND ⊢──►○

| | Abschaltung |

5

Versorgungs-spannung mit aufmoduliertem Teststimulus

21V ─

15V ─

| 8 ~ | Gebertest (Spule) |

| | Sicherheits-abschaltung | ~10 |

| 11 ~ | Schutz-beschaltung |

| 2 ~ | Hall-Sensor |

| | Stromquelle | ~4 |

Sensorsignal

- - - - magnetisches Signal

───── elektrisches Signal

EP 1 625 357 B1

**FIG 14**

EP 1 625 357 B1

Funktionsblöcke

6 — Abfräs-erkennung

Stromgeber

1" 1'

GND

Abschaltung

5

Versorgungs-spannung mit aufmoduliertem Teststimulus

8 — Gebertest (Spule)

Sicherheits-abschaltung — 10

11 — Schutz-beschaltung

21V
15V

2 — Hall-Sensor

Mitten-spannung

Pegel-anpassung

Sensorsignal

Transistor-ausgang

- - - - - magnetisches Signal

——— elektrisches Signal

············· wahlweise

**IN DER BESCHREIBUNG AUFGEFÜHRTE DOKUMENTE**

**In der Beschreibung aufgeführte Patentdokumente**

- EP 0886762 B1
- US 6009357 A